# EUROPÄISCHE PATENTANMELDUNG

(11) **EP 4 641 416 A1**
(43) Veröffentlichungstag der Anmeldung: **29.10.2025**
(21) Anmeldenummer: 24172686.8
(22) Anmeldetag: 26.04.2024
(51) Int. Cl.: G06F 21/53, G06F 21/55, H04L 9/40, G06F 9/455

(54) **VERFAHREN UND SYSTEM ZUR ZUGANGSKONTROLLE FÜR EINEN ZUGRIFF VON EINER CONTAINERINSTANZ AUF EINEN ABGESETZTEN DIENST**

(71) Anmelder: Siemens Aktiengesellschaft, 80333 München (DE)
(72) Erfinder: Hofmann, Benedikt, 82418 Murnau (DE); Knierim, Christian, 81373 München (DE)
(74) Vertreter: Siemens Patent Attorneys

(57) **Zusammenfassung**

Computer-implementiertes Verfahren zur Zugangskontrolle für einen Zugriff von einer Containerinstanz (CI, 26), ausgeführt in einer orchestrierten Umgebung (20), auf einen abgesetzten Dienst (40), umfassend die Schritte:
durch einer Anomalie-Erkennungskomponente (30),
- Überwachen (S1) von mindestens einer Umgebungsinformation, die in der orchestrierten Umgebung (20) ausgeführt wird,
- Identifizieren (S2) von mindestens einem Zugriffsprozess (ZP) umfassend einen ersten Authentisierungsfaktors (AF1), der von der Containerinstanz (CI, 26) zum Zugriff auf den Dienst (40) ausgeführt wird,
- Überprüfen (S3) von mindestens einer Zugriffsbedingung, die in einer AuthentisierungsRichtlinie (AR) für den Zu-griff von der Containerinstanz (CI, 26) auf den Dienst (40) vorgegeben ist, gegenüber der überwachten Umgebungs-information (UI),
- Auslesen (S4) eines zweiten Authentisierungsfaktors (AF2) aus der Authentisierungsrichtlinie (AR), wenn die überwachte Umgebungsinformation (UI) mit der mindestens einen Zugriffsbedingung übereinstimmt, ansonsten wird kein Authentisierungsfaktor ausgegeben (S5),
- Übermitteln (S6), des zweiten Authentisierungsfaktors (AF2) an den Dienst (40),

durch Dienst (40),
- Authentifizieren (S7) des zweiten Authentisierungsfaktors (AF2) zusätzlich zum Authentifizieren des ersten Authentisierungsfaktors (AF1) und Autorisierung des Zugriffs durch die Containerinstanz (CI, 26).

## Beschreibung

### Technisches Gebiet

Die Erfindung betrifft ein Verfahren, ein System und ein Computer-Programmprodukt Verfahren zur Zugangskontrolle von einer Container-implementierten Anwendung auf einen abgesetzten Dienst mittels Zwei-Faktor Authentisierung.

### Technischer Hintergrund

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft.

Eine orchestrierte Laufzeitumgebung umfasst einen Orchestrator, bevorzugt ausgebildet durch eine Orchestrierungssoftware, ausgeführt auf einem vom Gastrechner unterschiedlichen Computer, und mindestens einen Gastrechner, häufig aber ein Cluster aus einer Vielzahl von Gastrechnern, die dem Orchestrator zugeordnet sind. Der Orchestrator startet, verwaltet und beendet Containerinstanzen auf den Gastrechnern des Clusters.

Damit eine Containerinstanz bzw. eine in der Containerinstanz ausgeführte Anwendung auf einen abgesetzten Dienst zugreifen kann, muss sich die Containerinstanz mittels eines so genannten Geheimnisses am abgesetzten Dienst authentisieren. Der abgesetzte Dienst wird beispielsweise auf einem abgesetzten Server oder in einem Cloudbereich ausgeführt. Ein Geheimnis ist beispielsweise ein Passwort oder ein Zugangs-Token. Containerinstanzen können mit unterschiedlichen Privilegien konfiguriert werden, und sind abhängig von den zugewiesenen Privilegien erhöhten Angriffsmöglichkeiten ausgesetzt.

Eine weitere Angriffsmöglichkeit ergibt sich bei der Verwendung eines sogenannter Service Accounts, der von einem Orchestrator, insbesondere einer Orchestrierungssoftware Kubernetes, in orchestrierten Clustern verwendet wird. Durch die Zuordnung einer Containerinstanz zu einem Service Account wird durch den Orchestrator ein Service-Account-Token ausgestellt, welches zur Authentisierung am Dienst verwendet wird. Eine Unterscheidung der einzelnen Containerinstanzen des Service-Account ist bei der Authentisierung mit dem Service-Account-Token nicht zwingend notwendig. Ein Angreifer, der sich unberechtigt Zugriff auf die Containerinstanz verschafft, kann auf dieses Service-Account-Token zugreifen und es missbräuchlich an einer anderen Stelle einsetzen.

In solchen Fällen bietet eine Authentisierung mittels einem einzigen der Containerinstanz zugewiesenen Geheimnis keine ausreichende Sicherheit für die Authentizität der Containerinstanz. Andererseits ist für Dienste mit einer bestimmten Kritikalität eine erweiterte Authentisierung, beispielsweise über eine zweiten Authentisierungsfaktor erforderlich.

### Zusammenfassung der Erfindung

Es ist somit eine Aufgabe der vorliegenden Erfindung, den Zugriff von Containerinstanzen auf einen abgesetzten Dienst besser gegen Manipulation abzusichern, die Authentisierung der Containerinstanz mit einer zusätzlichen Sicherheitsprüfung zu verbessern.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Computer-implementiertes Verfahren zur Zugangskontrolle für einen Zugriff von einer Containerinstanz, ausgeführt in einer orchestrierten Umgebung, auf einen abgesetzten Dienst, umfassend folgende durch eine Anomalie-Erkennungskomponente ausgeführte Schritte:
- Überwachen von mindestens einer Umgebungsinformation, die in einer orchestrierten Umgebung in und/oder zwischen einer Verwaltungsvorrichtung und mindestens einem von der Verwaltungsvorrichtung verwalteten Gastrechnern ausgeführt wird,
- Identifizieren von mindestens einem Zugriffsprozess, der von der Containerinstanz beim Senden eines ersten Authentisierungsfaktors beim Zugriff auf den Dienst ausgeführt wird,
- Überprüfen von mindestens einer Zugriffsbedingung, die in einer Authentisierungs-Richtlinie für den Zugriff von der Containerinstanz auf den Dienst vorgegeben ist, gegenüber der überwachten Umgebungsinformation,
- Auslesen eines zweiten Authentisierungsfaktors aus der Authentisierungs-Richtlinie, wenn die überwachte Umgebungsinformation, mit der mindestens einen Zugriffsbedingung übereinstimmt, ansonsten wird kein Authentisierungsfaktor ausgegeben,
- Übermitteln, des zweiten Authentisierungsfaktors an den Dienst.
Durch den Dienst wird der zweiten Authentisierungsfaktor
zusätzlich zum ersten Authentisierungsfaktors authentifiziert und der Zugriff durch die Containerinstanz autorisiert.

Somit ist die Ausgabe des zweiten Authentisierungsfaktors von der Umgebungsinformation der Containerinstanz und den Vorgaben durch die Authentisierungsrichtlinie abhängig. Der Zugriff auf die Containerinstanz wird somit nur erlaubt, wenn nicht nur ein erster Authentisierungsfaktor, beispielsweise ein Geheimnis, sondern auch die Umgebungsinformation der Containerinstanz den gestellten Anforderungen entspricht. Faktoren, die auf eine Manipulation der Containerinstanz hinweisen, können somit überprüft und bei der Zugangsentscheidung berücksichtigt werden.

In einer vorteilhaften Ausführungsform wird bei jeden weiteren Zugriff der Containerinstanz auf den Dienst ein neuer zweiter Authentisierungsfaktor ermittelt.

Somit wird jeder einzelne Zugriff unabhängig vom Zeitabstand zum vorherigen Zugriff erneut überprüft. Dies sichert insbesondere bei sicherheitskritischen Diensten eine lückenlose Überprüfung der Containerinstanz.

In einer vorteilhaften Ausführungsform ist der zweite Authentisierungsfaktor für eine vorgegebenen Gültigkeitsdauer für weitere Zugriffe von der Containerinstanz auf den Dienst gültig.

Dies reduziert den Überwachungsaufwand und die dazu notwendige Prozessorkapazität in der Anomalie-Erkennungskomponente. Durch die erneute Überprüfung der Umgebungsinformation nach Ablauf der Gültigkeitsdauer ist eine regelmäßige Überprüfung der Umgebungsinformation und somit der Containerinstanz gesichert.

In einer vorteilhaften Ausführungsform ist die Gültigkeitsdauer in der Authentisierungsrichtlinie vorgegeben.

Somit kann die Gültigkeitsdauer flexibel vorgegeben werden, beispielsweise abhängig vom Dienst, oder abhängig von unterschiedlichen Parametern in der Umgebungsinformation vorgegeben werden.

In einer vorteilhaften Ausführungsform wird die Gültigkeitsdauer vor dem Übermitteln des zweiten Authentisierungsfaktors zwischen der Containerinstanz und dem Dienst ausgehandelt.

Somit kann die Gültigkeitsdauer abhängig von Vorgaben durch den Dienst angepasst werden.

Beispielsweise kann der Dienst die Gültigkeitsdauer abhängig vom ersten Authentisierungsfaktor festlegen.

In einer vorteilhaften Ausführungsform wird der zweite Authentisierungsfaktor für ungültig erklärt, wenn die Anomalie-Erkennungskomponente während der Gültigkeitsdauer eine unerwartete Umgebungsinformation erkennt.

Somit kann zeitnah auf ein unerwartetes Ereignis in der orchestrierten Umgebung reagiert werden.

In einer vorteilhaften Ausführungsform umfasst die Umgebungsinformation und somit auch die in der Authentisierungsrichtlinie enthaltenen Zugriffsbedingungen mindestens eines der folgenden Elemente:
- den Zugriffsprozess auf den Dienst,
- eine Konfiguration eines Betriebssystems eines ersten Gastrechners, auf dem die überwachte Containerinstanz ausgeführt wird,
- eine Konfiguration einer Containerlaufzeit des ersten Gastrechners,
- mindestens einen Prozess ausgeführt von anderen Containerinstanzen, die auf dem ersten Gastrechner ausgeführt werden,
- Audit Logs der Verwaltungsvorrichtung,
- eine Konfiguration der Verwaltungsvorrichtung.

Somit werden eine Vielzahl von Konfigurationen und Prozesse, die die Containerinstanz beeinflussen, für einen Abgleich mit der Authentisierungsrichtlinie überwacht.

In einer vorteilhaften Ausführungsform wird die Authentisierungsrichtlinie durch ein maschinelles Lernverfahren erzeugt.

Durch das maschinelle Lernverfahren kann die Authentisierungsrichtlinie basierend auf früheren Prozessen und Konfigurationen in der vorliegenden orchestrierten Umgebung oder in einer ähnlichen orchestrierten Umgebung spezifisch für die orchestrierte Umgebung erstellt werden.

In einer vorteilhaften Ausführungsform ist der zweite Authentisierungsfaktor ein statisches Passwort oder ein dynamisch generiertes Passwort.

Ein statisches Passwort kann mit wenig Rechen- und/oder Verwaltungsaufwand eingesetzt werden. Ein dynamisch generiertes Passwort kann flexibel auf zeitlich variierenden Vorgaben oder abhängig von anderen Parametern in der Authentisierungsrichtlinie angepasst werden.

In einer vorteilhaften Ausführungsform übermittelt die Anomalie-Erkennungskomponente den zweiten Authentisierungsfaktor über eine kryptographisch gesicherte Verbindung an den Dienst.

Somit kann die Integrität des zweiten Authentisierungsfaktors und/oder die Authentizität des Anomalieerkennungsvorrichtung überprüft und somit eine Manipulation bei der Übertragung festgestellt werden.

Gemäß einem zweiten Aspekt betrifft die Erfindung eine Anomalie-Erkennungskomponente zur Zugangskontrolle für einen Zugriff von einer Containerinstanz, ausgeführt in einer orchestrierten Umgebung, auf einen abgesetzten Dienst, umfassend mindestens einen Prozessor, die ausgebildet ist zum
- Überwachen von mindestens einer Umgebungsinformation, die in der orchestrierten Umgebung ausgeführt wird,
- Identifizieren von mindestens einem Zugriffsprozess, der von der Containerinstanz beim Senden eines ersten Authentisierungsfaktors beim Zugriff auf den Dienst ausgeführt wird,
- Überprüfen von mindestens einer Zugriffsbedingung, die in einer Authentisierungs-Richtlinie für den Zugriff von der Containerinstanz auf den Dienst vorgegeben ist, gegenüber der überwachten Umgebungsinformation,
- Auslesen eines zweiten Authentisierungsfaktors aus der Authentisierungsrichtlinie, wenn die überwachte Umgebungsinformation mit der mindestens einen Zugriffsbedingung übereinstimmt, ansonsten wird kein zweiter Authentisierungsfaktor ausgegeben, und
- Übermitteln des zweiten Authentisierungsfaktors an den Dienst.

Die Anomalie-Erkennungskomponente ermöglicht es, den Zustand der orchestrierten Umgebung zu ermitteln und die Ausgabe des zweite Authentisierungsfaktors abhängig von Zugriffsbedingungen, die sich auf die überwachte Umgebungsinformation beziehen, zu steuern.

Gemäß einem dritten Aspekt betrifft die Erfindung ein System zur Zugangskontrolle für einen Zugriff von einer Containerinstanz, ausgeführt auf einem Gastrechner in einer orchestrierten Umgebung, auf einen abgesetzten Dienst, umfassend eine Anomalie-Erkennungskomponente, die ausgebildet ist zum
- Überwachen von mindestens einer Umgebungsinformation, die in der orchestrierten Umgebung ausgeführt wird,
- Identifizieren von mindestens einem Zugriffsprozess, der von der Containerinstanz beim Senden eines ersten Authentisierungsfaktors beim Zugriff auf den Dienst ausgeführt wird,
- Überprüfen von mindestens einer Zugriffsbedingung, die in einer Authentisierungs-Richtlinie (AR) für den Zugriff von der Containerinstanz auf den Dienst vorgegeben ist, gegenüber der überwachten Umgebungsinformation,
- Auslesen (S4) eines zweiten Authentisierungsfaktors aus der Authentisierungsrichtlinie (AR), wenn die überwachte Umgebungsinformation mit der mindestens einen Zugriffsbedingung überein stimmt, ansonsten wird kein Authentisierungsfaktor ausgegeben,
- Übermitteln, des zweiten Authentisierungsfaktors an den Dienst, und
einen Dienst, der ausgebildet ist zum
Authentifizieren des zweiten Authentisierungsfaktors zusätzlich zum Authentifizieren des ersten Authentisierungsfaktors und Autorisierung des Zugriffs durch die Containerinstanz.

Gemäß einem vierten Aspekt betrifft die Erfindung ein Computerprogrammprodukt, umfassend ein nicht flüchtiges computer-lesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine erstes Ausführungsbeispiel des erfindungsgemäßen Verfahrens als Ablaufdiagramm;
- Fig. 2: ein Ausführungsbeispiel des erfindungsgemäßen Systems in schematischer Darstellung; und
- Fig. 3: ein zweites Ausführungsbeispiel des erfindungsgemäßen Verfahrens ausgeführt durch ein Ausführungsbeispiel des erfindungsgemäßen Systems als Sequenzdiagramm.

Einander entsprechende Teile sind in allen Figuren mit den gleichen Bezugszeichen versehen.

Sofern es in der nachfolgenden Beschreibung nicht anders angegeben ist, beziehen sich die Begriffe "überwachen", "identifizieren", "überprüfen", "auslesen", "übermitteln", "authentifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise ein Gastrechner bzw. die auf dem Gastrechner implementierte Container-Laufzeitumgebung, die Verwaltungsvorrichtung, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

### Detaillierte Beschreibung der Ausführungsbeispiele

Unabhängig vom grammatikalischen Geschlecht eines bestimmten Begriffes sind Personen mit männlicher, weiblicher oder anderer Geschlechteridentität mit umfasst.

### Hintergrund

Containerinstanzen werden in orchestrierten Container-Laufzeitumgebungen wie z.B. Kubernetes betrieben. In größeren orchestrierten Umgebungen werden viele Containerinstanzen von einer Verwaltungsvorrichtung verwaltet und auf unterschiedlichen Gastrechnern ausgeführt. Um sich an anderen Diensten authentisieren zu können, benötigt die Containerinstanz ein Geheimnis.

Es sind unterschiedliche Mechanismen bekannt, um der Containerinstanz ein geheimes Zugangsdatum, auch kurz Geheimnis bezeichnet, zur Verfügung zu stellen. Das Zugangsdatum kann beispielsweise ein JSON Web Token, Passwort oder privater (Zertifikats-)Schlüssel sein.

In einer Variante verwaltet die Verwaltungsvorrichtung die Geheimnisse und weist sie direkt als Laufwerk oder als Umgebungsvariablen der Containerinstanz zu. In einer anderen Variante wird der Containerinstanz ein Service-Account und damit verbunden ein Access-Token durch die Verwaltungsvorrichtung zugewiesen. Die Containerinstanz kann das Access-Token als Zugangsdatum verwenden um sich an einem entfernten, über ein Netzwerk exponierten Service zu authentisieren.

Beide Ansätze haben keinen inhärenten Schutz gegen eine kompromittierte Containerinstanz und können nicht überprüfen, ob das Zugangsdatum tatsächlich und ausschließlich von der vorgesehenen Containerinstanz verwendet wurde. In diesen Fällen kann der Angreifer das Zugangsdatum nutzen und auf die Ressourcen des abgesetzten Services zugreifen und beispielsweise vertrauliche Daten aus dem Schlüsseltresor unberechtigt auslesen und seinen Angriff ausweiten.

### Beschreibung der Erfindung

Eine grundlegende Idee der Erfindung besteht darin, bestehende ein-Faktor-Authentisierungsverfahren für Containerinstanzen, um einen zweiten Authentisierungsfaktor zu erweitern, der die Vorgänge in der orchestrierten Umgebung der Containerinstanz berücksichtigt. Die orchestrierte Umgebung umfasst eine Verwaltungsvorrichtung, die Containerinstanzen verwaltet sowie ein Cluster an Gastrechnern, die der Verwaltungsvorrichtung zugeordnet sind und auf denen die Containerinstanzen ausgeführt werden.

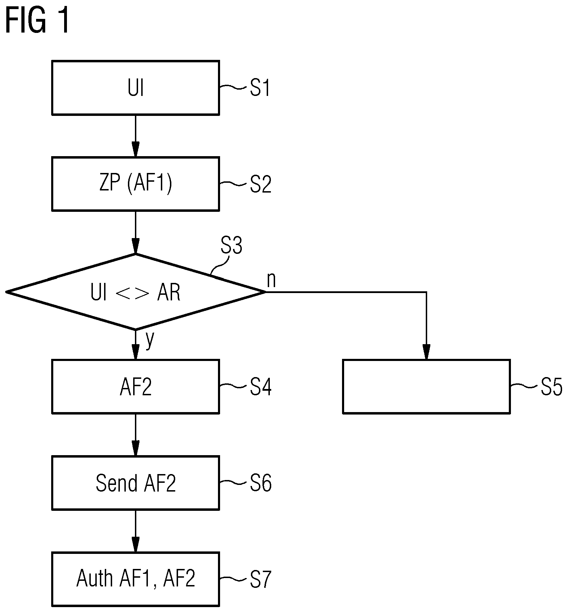

Im Folgenden wird das vorgeschlagene Verfahren zur Zugangskontrolle für einen Zugriff von einer Containerinstanz auf einen abgesetzten Dienst anhand von Fig. 1 näher erläutert. Die Containerinstanz wird auf einem der Verwaltungsvorrichtung zugeordneten ersten Gastrechner ausgeführt. Der abgesetzte Dienst kann innerhalb oder außerhalb der orchestrierten Umgebung ausgeführt werden. Der abgesetzte Dienst kann ein über das Internet erreichbarer Webservices, zentrale Authentisierungsdienste oder allgemein eine Anwendungsschnittstelle wie beispielsweise eine REST-API sein. Der Dienst kann als Backend-Service in einer Cloud ausgeführt werden oder als "lokaler" Dienst in einem anderen direkt angeschlossenen Gerät ausgeführt werden.

Dabei wird mindestens eine Umgebungsinformation UI der orchestrierten Umgebung von einer Anomalie-Erkennungskomponente überwacht und aufgezeichnet, siehe Schritt S1. Die überwachte Umgebungsinformation UI umfasst Prozesse die die betrachtete Containerinstanz aber auch andere Containerinstanzen, die auf dem ersten aber auch auf anderen Gastrechnern im Cluster ausgeführt werden. Insbesondere überwacht die Anomalie-Erkennungskomponente Zugriffsprozesse von Containerinstanzen auf den Dienst. Des Weiteren wird eine Konfiguration eines Betriebssystems eines ersten Gastrechners als Umgebungsinformation UI überwacht. Weitere Umgebungsinformation UI betrifft eine Konfiguration einer Containerlaufzeit des ersten Gastrechners, eine Konfiguration der Verwaltungsvorrichtung, Audit Logs der Verwaltungsvorrichtung, und dergleichen.

Wird mindestens ein Zugriffsprozess ZP, der von der Containerinstanz beim Zugriff auf den Dienst ausgeführt wird, identifiziert, siehe S2, wird anschließend mindestens eine Zugriffsbedingung, die in einer Authentisierungs-Richtlinie AR für den Zugriff von der Containerinstanz auf den Dienst vorgegeben ist, gegenüber der überwachten und bevorzugt aufgezeichneten Umgebungsinformation UI überprüft, siehe S3. Stimmt die überwachte Umgebungsinformation UI mit der mindestens einen Zugriffsbedingung überein, wird eine zweiten Authentisierungsfaktors aus der Authentisierungsrichtlinie AR ausgelesen, siehe S4. Anschließend wird der zweiten Authentisierungsfaktors an den Dienst übermittelt, siehe S6. Der Dienst authentifiziert den zweiten Authentisierungsfaktors zusätzlich einem ersten Authentisierungsfaktors und gewährt damit der Containerinstanz Zugriff auf den Dienst, siehe S7. Der erste Authentisierungsfaktor wird beispielsweise bei dem identifizierten Zugriffsprozess an den Dienst übermittelt.

In einem Zero-Trust Sicherheitsregime wird bei jedem weiteren Zugriff der Containerinstanz auf den Dienst ein neuer zweiter Authentisierungsfaktor ermittelt. Alternativ ist der zweite Authentisierungsfaktor für eine vorgegebenen Gültigkeitsdauer gültig, sodass während der Gültigkeitsdauer bei einem weiteren Zugriff der Containerinstanz auf den Dienst die Zugriffsbedingung der Authentisierungsrichtlinie AR nicht überprüft wird. Die Gültigkeitsdauer des zweiten Authentisierungsfaktors AF2 wird bevorzugt in der Authentisierungsrichtlinie AR vorgegeben. Ist der zweite Authentisierungsfaktor AF2 lediglich für eine bestimmte Zeit gültig, muss die Anomalie-Erkennungskomponente den jeweiligen Authentisierungsfaktor AF2 und dessen Gültigkeitsdauer verwalten und sicherstellen, dass bei erneuten Zugriffen durch die Containerinstanz nach Ablauf der Gültigkeitsdauer erneut ein neuer Authentisierungsfaktor AF2 geliefert wird.

In einem Ausführungsbeispiel wird die Gültigkeitsdauer vor dem Übermitteln des zweiten Authentisierungsfaktors AF2 zwischen der Containerinstanz und dem Dienst ausgehandelt. Das Aushandlungsverfahren hat den Vorteil, dass der abgesetzte Dienst selbst bestimmen kann, wann erneut ein neuer zweiter Authentisierungsfaktor AF2 geliefert werden soll. Der Dienst kann die Gültigkeitsdauer auch in Abhängigkeit vom ersten Faktor festlegen.

Optional wird der zweite Authentisierungsfaktor AF2 für ungültig erklärt, wenn die Anomalie-Erkennungskomponente während der Gültigkeitsdauer eine unerwartete Umgebungsinformation Ul erkennt. Beispielsweise wird bei einem erkannten illegitimen Zugriff auf den abgesetzten Dienst durch einen nicht erwarteten Prozess der Remote-Service benachrichtigt und somit der zweite Authentisierungsfaktor invalidiert. Die Anomalie-Erkennungskomponente informiert in diesem Fall den Dienst, dass der aktuelle zweite Authentisierungsfaktor AF2 ungültig ist.

Der zweite Authentisierungsfaktor AF2 für die Containerinstanz CI kann knotenspezifisch auf dem Gastrechner gespeichert werden, auf dem die Containerinstanz ausgeführt wird, im beschriebenen Fall auf dem ersten Gastrechner. In einer Variante wird der zweite Authentisierungsfaktor AF2 für die Containerinstanz Cl auf einer Verwaltungsvorrichtung der orchestrierten Umgebung gespeichert und ist ausschließlich für die Anomalie-Erkennungskomponente zugreifbar.

Der zweite Authentisierungsfaktor AF2 ist ein statisches Passwort oder ein dynamisch generiertes Passwort. Der zweite Authentisierungsfaktor AF2 kann als ein statisches Passwort, oder ein zweiter Teil eines Shamir-Secrets sein. Alternativ kann der zweite Authentisierungsfaktor AF2 dynamisch zur Laufzeit, beispielsweise mittels eines Time Based One-Time Password-Verfahrens oder sonstigen Algorithmen berechnet werden.

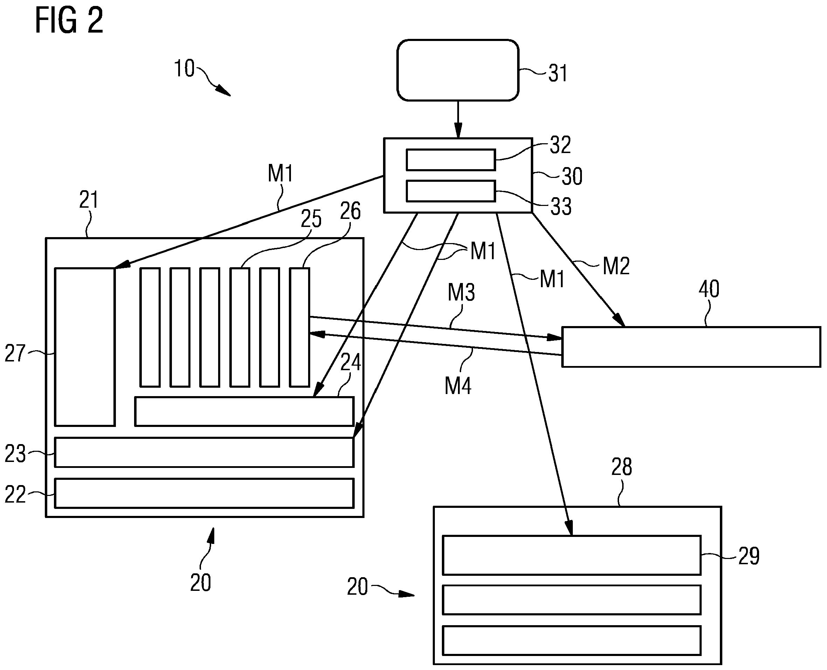

In Fig.2 ist ein System 10 dargestellt, das ausgebildet ist das beschriebene Verfahren auszuführen. Das System 10 umfasst eine orchestrierte Umgebung 20 enthaltend einen mindestens einen Gastrechner, hier dargestellt ein ersten Gastrechner 21, sowie eine Verwaltungsvorrichtung 28. Der mindestens eine Gastrechner 20 führt Containerinstanzen 25 auf einer Containerlaufzeitumgebung 24 aus. Die Containerlaufzeitumgebung 24 greift auf das Betriebssystem 23 und Hardwareressourcen 22 des Gastrechners 21 zu. Der Gastrechner 21 umfasst des Weiteren einen Orchestrierungsclient 26, der mit der Verwaltungsvorrichtung 28 und insbesondere mit einem darauf implementierten Orchestrierungsserver 29 kommuniziert.

Das System 10 umfasst des Weiteren eine Anomalie-Erkennungskomponente 30, die eine 2-Faktor-Steuerungseinheit 32, eine Anomalie-Detektoreinheit 33 und eine Schnittstelle zum Zugriff auf eine Authentisierungs-Richtlinie 31 umfasst. Die Anomalie-Erkennungskomponente 30, insbesondere die Anomalie-Detektoreinheit 33 überwacht die orchestrierte Umgebung 20. Dabei ist die Anomalie-Detektoreinheit 33 befähigt, die Konfiguration des Betriebssystems 23, der Containerlaufzeitumgebung 24 und des Orchestrierungskomponente zu überprüfen. Die Anomalie-Detektoreinheit 33 kann aktiv Abläufe im Kernel des Betriebssystems 23 überwachen, beispielweise mittels einem Kernel Modul oder einem extended Berkley Packet Filter (eBPF). Zusätzlich kann das Anomalie-Erkennungskomponente auch die Verwaltungsvorrichtung überwachen und beispielsweise Audit logs auslesen und deren Ergebnisse abfragen.

Die Authentisierungs-Richtlinie 31 gibt die von der Anomalie-Erkennungskomponente 30 zu überwachende Prozesse und Objekte vor. Die Authentisierungs-Richtlinie 31 kann als integraler Teil der Anomalie-Erkennungskomponente 30 oder von der Anomalie-Erkennungskomponente 30 abgesetzt ausgebildet sein. Die kann Authentisierungs-Richtlinie 31 kann statisch erstellt werden oder mit Hilfe von Künstlicher Intelligenz, beispielsweise einem maschinellen Lernverfahren erstellt werden. Die Authentisierungs-Richtlinie 31 kann einen einzelnen Prozess oder eine Abfolge von Prozessen und/oder Operationen umfassen, die optional andere Containerinstanz betreffen oder Operationen auf dem anderen Gastrechnern des Clusters sowie der Verwaltungsvorrichtung 28 betreffen.

Die Anomalie-Erkennungskomponente 30 überwacht die durchgeführten Prozesse und Operationen durch zyklisches Abfragen oder veranlasst durch Benachrichtigungen des Betriebssystem-Kernels der überwachten Einheit der orchestrierten Umgebung 20.

Wird ein entsprechender Zugriffsprozess M3 von einer Containerinstanz 26 auf einen abgesetzten Dienst 40 identifiziert, benachrichtigt die Anomalie-Erkennungskomponente 30, insbesondere die 2-Faktor-Steuerungseinheit 32 den abgesetzten Dienst 40 von dem Zugriff. Dies erfolgt beispielsweise über die gleiche Schnittstelle wie zur Containerinstanz 25 oder über einen speziell abgesicherten Kanal. Die Anomalie-Erkennungskomponente 33 umfasst einen Authentisierungstoken zum Aufbau einer kryptographisch gesicherten Verbindung zum abgesetzten Dienst 40.

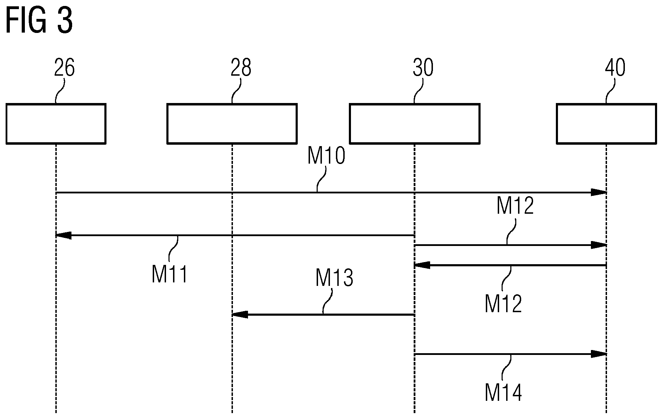

Anhand von Fig. 3 wird ein Zugriff der Containerinstanz 26 auf den abgesetzten Dienst 40 näher beschrieben.

Die Containerinstanz 26 übermittelt einen ersten Authentisierungsfaktor AF1 in eine Zugriffsanfrage an den Dienst 40, siehe M10. Der erste Authentisierungsfaktor AF1 ist beispielsweise ein Service Account Zugangs-Token, der von der Verwaltungsvorrichtung 30 der Containerinstanz 26 zugewiesen wurde. Die Anomalie-Erkennungskomponente 30 erkennt durch die Überwachung der orchestrierten Umgebung den Zugriffprozess der Containerinstanz 26, siehe M11.

Die Anomalie-Erkennungskomponente 30 ist autorisiert die Gastrechner zu überwachen. Die Anomalie-Erkennungskomponente 30 überprüft Zugriffsbedingungen, die in der Authentisierungs-Richtlinie AR für den Zugriff von der Containerinstanz 26 auf den Dienst 40 vorgegeben sind, gegenüber der überwachten Umgebungsinformation, siehe M12. Die Zugriffsbedingungen betreffen bzw. die überwachten Prozesse sind beispielsweise der Prozess, der die Anfrage gestellt hat, die Konfiguration des Betriebssystems des ersten Gastrechners 21 und/oder der anderen Gastrechner im Cluster, die Konfiguration der Containerlaufzeitumgebung des ersten Gastrechners 21, Audit Logs des Orchestrierungsclients 27 im ersten Gastrechner 21 bzw. in der Verwaltungsvorrichtung 28, eine Konfiguration der Verwaltungsvorrichtung 28, insbesondere des Orchestrierungsservers 29, und dergleichen mehr.

Die Art der Überprüfung kann hier unterschiedlich implementiert sein. Die Überprüfung kann Richtlinien-basierte sein und explizit bestimmte Werte in den Überwachungsergebnissen, d.h. in der Umgebungsinformation erwarten. Die Überprüfung kann mittels Anomaliedetektion erfolgen, die über das Sammeln von Daten und mithilfe von Künstlicher Intelligenz anomales Verhalten erkennt und daraufhin eine Entscheidung herbeiführt. Es können hybride Ansätze gewählt werden, wobei beide oben genannten Überprüfungsansätze mittels bestimmter Algorithmen kombiniert werden.

Werden die Zugriffsbedingungen erfüllt, wird der zweite Authentisierungsfaktor AF2 ermittelt, siehe M13 und an den abgesetzten Dienst 40 übermittelt, siehe M14. Der zweite Authentisierungsfaktor AF2 wird der Anomalie-Erkennungskomponente 30 beispielsweise durch die Authentisierungs-Richtlinie 31 bereitgestellt oder wie dargestellt, durch die Orchestrierungsvorrichtung 30 bereitgestellt. Der Dienst 40 gibt nach einer erfolgreichen Authentifizierung des ersten Authentifizierungsfaktors AF1 und des zweiten Authentifizierungsfaktors AF2 den Zugriff für die Containerinstanz 26 frei.

Prinzipiell kann das Verfahren auch eingesetzt werden, wenn statt über Netzwerk-Sockets eine Anmeldung z.B. über Unix-Domain-Sockets o.ä. durchgeführt wird.

Bekannte Lösungen können nicht dynamisch und automatisiert auf kompromittierte und fehlkonfigurierte Systeme reagieren. Damit können Angreifer ihren Zugriff ausbreiten und auf mehrere Ressourcen zugreifen. Das beschriebene Verfahren bzw. System und die Anomalie-Erkennungskomponente schützen Ressourcen, indem der Status der Laufzeitumgebung mit in die Autorisierungs-Entscheidung mit einbezogen werde. Das Verfahren bzw. System ist Betriebssystemunabhängig und verhält sich neutral zu den gängigen Dienstherstellern, insbesondere für Schlüsseltresore, da alle Multi-Faktor-Authentisierung unterstützten und damit der beschriebene Ansatz "cross cloud" umgesetzt werden kann. Der beschriebene Ansatz unterstützt das Zero Trust Prinzip für Maschine-zu-Maschine-Kommunikation da der Zugriff auf den Dienst erstmals über einen 2ten Faktor abgesichert werden kann.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computer-implementiertes Verfahren zur Zugangskontrolle für einen Zugriff von einer Containerinstanz (CI, 26), ausgeführt in einer orchestrierten Umgebung (20), auf einen abgesetzten Dienst (40), umfassend die Schritte:
durch einer Anomalie-Erkennungskomponente (30),
- Überwachen (S1) von mindestens einer Umgebungsinformation, die in der orchestrierten Umgebung (20) ausgeführt wird,
- Identifizieren (S2) von mindestens einem Zugriffsprozess (ZP) umfassend einen ersten Authentisierungsfaktors (AF1), der von der Containerinstanz (CI, 26) zum Zugriff auf den Dienst (40) ausgeführt wird,
- Überprüfen (S3) von mindestens einer Zugriffsbedingung, die in einer Authentisierungs-Richtlinie (AR) für den Zu-griff von der Containerinstanz (CI, 26) auf den Dienst (40) vorgegeben ist, gegenüber der überwachten Umgebungs-information (UI),
- Auslesen (S4) eines zweiten Authentisierungsfaktors (AF2) aus der Authentisierungsrichtlinie (AR), wenn die überwachte Umgebungsinformation (UI) mit der mindestens einen Zugriffsbedingung übereinstimmt, ansonsten wird kein Authentisierungsfaktor ausgegeben (S5),
- Übermitteln (S6), des zweiten Authentisierungsfaktors (AF2) an den Dienst (40),
durch Dienst (40),
- Authentifizieren (S7) des zweiten Authentisierungsfaktors (AF2) zusätzlich zum Authentifizieren des ersten Authentisierungsfaktors (AF1) und Autorisierung des Zu-griffs durch die Containerinstanz (CI, 26).

2. Computer-implementiertes Verfahren nach Anspruch 1, wobei bei jedem weiteren Zugriff der Containerinstanz (CI, 26) auf den Dienst (40) ein neuer zweiter Authentisierungsfaktor (AF2) ermittelt wird.

3. Computer-implementiertes Verfahren nach Anspruch 1, wobei der zweite Authentisierungsfaktor (AF2) für eine vorgegebenen Gültigkeitsdauer für weitere Zugriffe von der Containerinstanz (CI, 26) auf den Dienst (40) gültig ist.

4. Computer-implementiertes Verfahren nach Anspruch 3, wobei die Gültigkeitsdauer in der Authentisierungsrichtlinie (AR) vorgegeben ist.

5. Computer-implementiertes Verfahren nach Anspruch 3, wobei die Gültigkeitsdauer vor dem Übermitteln des zweiten Authentisierungsfaktors (AF2) zwischen der Containerinstanz (CI, 26) und dem Dienst (40) ausgehandelt wird.

6. Computer-implementiertes Verfahren nach einem der Ansprüche 3-5, wobei der zweite Authentisierungsfaktor (AF2) für ungültig erklärt wird, wenn die Anomalie-Erkennungskomponente (30) während der Gültigkeitsdauer eine unerwartete Umgebungsinformation (UI) erkennt.

7. Computer-implementiertes Verfahren nach einem der vorangehenden Ansprüche, wobei die Umgebungsinformation (UI) mindestens eines der folgenden Elemente umfasst:
- den Zugriffsprozess (ZP) auf den Dienst (40),
- eine Konfiguration eines Betriebssystems (23) eines ersten Gastrechners, auf dem die überwachte Containerinstanz (CI, 26) ausgeführt wird,
- eine Konfiguration einer Containerlaufzeit (24) des ersten Gastrechners,
- mindestens einen Prozess ausgeführt von anderen Containerinstanzen, die auf dem ersten Gastrechner ausgeführt werden,
- Audit Logs der Verwaltungsvorrichtung (28),
- eine Konfiguration der Verwaltungsvorrichtung (28).

8. Computer-implementiertes Verfahren nach einem der vorangehenden Ansprüche, wobei die Authentisierungs-Richtlinie (AR) durch ein maschinelles Lernverfahren erzeugt wird.

9. Computer-implementiertes Verfahren nach einem der vorangehenden Ansprüche, wobei der zweite Authentisierungsfaktor (AF2) ein statisches Passwort oder ein dynamisch generiertes Passwort ist.

10. Computer-implementiertes Verfahren nach einem der vorangehenden Ansprüche, wobei die Anomalie-Erkennungskomponente (30) den zweiten Authentisierungsfaktor (AF2) über eine kryptographisch gesicherte Verbindung an den Dienst übermittelt.

11. Anomalie-Erkennungskomponente zur Zugangskontrolle für einen Zugriff von einer Containerinstanz (CI, 26), ausgeführt in einer orchestrierten Umgebung (20), auf einen abgesetzten Dienst (40), umfassend mindestens einen Prozessor, die ausgebildet ist zum
- Überwachen von mindestens einer Umgebungsinformation (UI), die in der orchestrierten Umgebung (20) ausgeführt wird,
- Identifizieren von mindestens einem Zugriffsprozess (ZP), der von der Containerinstanz (CI, 26) beim Senden eines ersten Authentisierungsfaktors (AF2) beim Zugriff auf den Dienst (40) ausgeführt wird,
- Überprüfen von mindestens einer Zugriffsbedingung, die in einer Authentisierungsrichtlinie (AR) für den Zugriff von der Containerinstanz (CI, 26) auf den Dienst (40) vor-gegeben ist, gegenüber der überwachten Umgebungsinformation (UI),
- Auslesen eines zweiten Authentisierungsfaktors aus der Authentisierungsrichtlinie (AR), wenn die überwachte Umgebungsinformation (UI) mit der mindestens einen Zugriffsbedingung übereinstimmt, ansonsten wird kein zweiter Authentisierungsfaktor (AF2) ausgegeben, und
- Übermitteln des zweiten Authentisierungsfaktors (AF2) an den Dienst.

12. Anomalie-Erkennungskomponente (30) nach Anspruch 11, umfassend eine Anomalie-Detektoreinheit (33), die ausgebildet ist mindestens eine der folgende Umgebungsinformationen (UI) zu überwachen:
- den Zugriffsprozess (ZP) auf den Dienst (40),
- eine Konfiguration eines Betriebssystems (23) eines ersten Gastrechners, auf dem die überwachte Containerinstanz (CI, 26) ausgeführt wird,
- eine Konfiguration einer Containerlaufzeit (24) des ersten Gastrechners (20),
- mindestens einen Prozess ausgeführt von anderen Containerinstanzen (25), die auf dem ersten Gastrechner (20) ausgeführt werden,
- Audit Logs der Verwaltungsvorrichtung (28),
- eine Konfiguration der Verwaltungsvorrichtung (28).

13. System zur Zugangskontrolle für einen Zugriff von einer Containerinstanz (CI, 26), ausgeführt auf einem Gastrechner in einer orchestrierten Umgebung (20), auf einen abgesetzten Dienst (40), umfassend
eine Anomalie-Erkennungskomponente (30), die ausgebildet ist zum
- Überwachen (S1) von mindestens einer Umgebungsinformation, die in der orchestrierten Umgebung (20) ausgeführt wird,
- Identifizieren (S2) von mindestens einem Zugriffsprozess (ZP), der von der Containerinstanz (CI, 26) beim Senden eines ersten Authentisierungsfaktors (AF1) beim Zugriff auf den Dienst (40) ausgeführt wird,
- Überprüfen (S3) von mindestens einer Zugriffsbedingung, die in einer Authentisierungs-Richtlinie (AR) für den Zugriff von der Containerinstanz (CI, 26) auf den Dienst (40) vorgegeben ist, gegenüber der überwachten Umgebungsinformation (UI),
- Auslesen (S4) eines zweiten Authentisierungsfaktors (AF2) aus der Authentisierungsrichtlinie (AR), wenn die überwachte Umgebungsinformation (UI) mit der mindestens einen Zugriffsbedingung übereinstimmt, ansonsten wird kein zweiter Authentisierungsfaktor (AF2) ausgegeben,
- Übermitteln, des zweiten Authentisierungsfaktors (AF2) an den Dienst (40), und
einen Dienst (40), der ausgebildet ist zum
Authentifizieren des zweiten Authentisierungsfaktors (AF2) zusätzlich zum Authentifizieren des ersten Authentisierungsfaktors (AF1) und Autorisierung des Zugriffs durch die Containerinstanz (CI, 26).

14. Computerprogrammprodukt, umfassend ein nicht flüchtiges computerlesbares Medium, das direkt in einen Speicher von mindestens einem digitalen Computer ladbar ist, umfassend Pro-grammcodeteile, die bei Ausführung der Programmcodeteile durch den mindestens einen digitalen Computer diesen veranlassen, die Schritte des Verfahrens nach einem der Ansprüche 1 bis 10 durchzuführen.
